# EUROPÄISCHE PATENTSCHRIFT

(11) **EP 2 655 105 B1**
(45) Veröffentlichungstag und Bekanntmachung des Hinweises auf die Patenterteilung: **22.04.2015**
(21) Anmeldenummer: 11787795.1
(22) Anmeldetag: 17.11.2011
(51) Int. Cl.: B60H 1/00

(54) **VERFAHREN ZUM BEHEIZEN EINES INNENRAUMES EINES KRAFTFAHRZEUGES**
METHOD FOR HEATING AN INTERIOR OF A MOTOR VEHICLE
PROCÉDÉ DE CHAUFFAGE D'UN VOLUME INTÉRIEUR D'UN VÉHICULE AUTOMOBILE

(30) Priorität: 24.12.2010 DE 102010056208
(43) Veröffentlichungstag der Anmeldung: 30.10.2013
(73) Patentinhaber: Daimler AG, 70327 Stuttgart (DE)
(72) Erfinder: LEDERBOGEN, Matthias, 89143 Blaubeuren (DE); POST, Gerald, 73079 Süssen (DE)
(74) Vertreter: JENSEN & SON
(86) Internationale Anmeldenummer: PCT/EP2011/005800
(87) Internationale Veröffentlichungsnummer: WO 2012/084104

(56) Entgegenhaltungen:
- DE-T2- 60 210 693
- DE-T2- 69 816 235
- DE-T5-112007 002 347
- FR-A1- 2 819 760
- US-A1- 2004 195 345

## Beschreibung

Die Erfindung betrifft ein Verfahren zum Beheizen eines Innenraumes eines Kraftfahrzeuges, wobei das Kraftfahrzeug eine Brennstoffzelle aufweist.

Die US 2004/0195345 A1 beschreibt eine Vorrichtung zur Klimatisierung eines Innenraumes eines Kraftfahrzeuges, wobei Abwärme einer Brennstoffzelle des Kraftfahrzeuges durch eine Wärmeübertragungsvorrichtung für eine Erwärmung von Luft verwendet wird, wobei die erwärmte Luft dem Innenraum zugeführt wird. Als zusätzliche Wärmequelle zur weiteren Erwärmung der dem Innenraum zugeführten Luft weist die Vorrichtung eine elektrisch betriebene Heizeinrichtung auf.

Die gattungsgemäße FR 2819760 A1 beschreibt ein Verfahren zum Beheizen eines Innenraumes eines Kraftfahrzeuges, bei welchem eine elektrische Leistung einer Brennstoffzelle in Abhängigkeit von einem Wärmebedarf des Innenraumes eingestellt wird, wobei eine Abwärme der Brennstoffzelle zum Erwärmen des Innenraumes verwendet wird. Bei einem erhöhten Wärmebedarf für den Innenraum werden die elektrische Leistung der Brennstoffzelle und damit verbunden auch die Abwärme der Brennstoffzelle erhöht. Überschüssige elektrische Leistung der Brennstoffzelle wird zum Laden einer Batterie verwendet.

Es ist somit die Aufgabe der vorliegenden Erfindung, ein Verfahren zum Beheizen eines Innenraumes eines Kraftfahrzeuges vorzuschlagen, welches eine Vereinfachung eines mit dem Verfahren verbundenen Heizsystems erlaubt und welches einen höheren energetischen Gesamtwirkungsgrad aufweist.

Die Aufgabe wird gelöst durch ein Verfahren zum Beheizen eines Innenraumes eines Kraftfahrzeuges mit den Merkmalen des Anspruchs 1. Vorteilhafte Weiterbildungen der Erfindung ergeben sich aus den Unteransprüchen.

Das Kraftfahrzeug weist dabei eine Brennstoffzelle, eine Klimamessvorrichtung sowie eine Wärmeübertragungsvorrichtung zur Übertragung von Wärme, welche Wärme von der Brennstoffzelle generiert wird, zu dem Innenraum des Kraftfahrzeuges auf.

Die Brennstoffzelle kann dabei elektrische Energie für einen elektrischen Fahrantrieb des Kraftfahrzeuges oder auch für sonstige elektrische Verbraucher des Kraftfahrzeuges liefern. Außerdem kann die Brennstoffzelle elektrische Energie zur Aufladung eines elektrischen Energiespeichers zur Verfügung stellen.

Mittels der Klimamessvorrichtung wird mindestens ein Klimaparameter des Innenraumes des Kraftfahrzeuges ermittelt. Bei dem Klimaparameter handelt es sich um einen Parameter, der eine im Innenraum herrschende physikalische Klimagröße wie zum Beispiel eine Innenraumtemperatur oder eine Innenraumluftfeuchtigkeit wiedergibt, der Klimaparameter kann aber auch eine Klimawunschgröße sein, die ein Fahrer oder ein Mitfahrer des Kraftfahrzeuges in einer Klimatisierungs-Bedieneinheit eingegeben hat. Eine Klimawunschgröße ist zum Beispiel eine Soll-Innentemperatur oder eine Soll-Innenraumluftfeuchtigkeit.

Die Wärmeübertragungsvorrichtung ist so konzipiert, dass sie eine thermische Kopplung zwischen dem Innenraum und der Brennstoffzelle herstellt. Sie besteht aus einem oder mehreren Wärmeaustauscher-Systemen, wobei über den oder die Wärmeaustauscher Wärme, welche von der Brennstoffzelle generiert wird, in den Innenraum des Kraftfahrzeuges transportiert wird.

Erfindungsgemäß wird mindestens ein Betriebsparameter der Brennstoffzelle neben anderen Abhängigkeiten auch in Abhängigkeit von dem Klimaparameter des Innenraumes des Kraftfahrzeuges eingestellt, wobei eine Rate der Wärme, welche von der Brennstoffzelle generiert wird, von dem Betriebsparameter abhängt. Auf diese Art und Weise wird die von der Brennstoffzelle generierte Wärme in Abhängigkeit von dem Klimaparameter eingestellt. Mit der Rate der Wärme ist eine generierte Wärmemenge pro Zeit gemeint.

Gegenüber dem Stand der Technik besteht hierbei der Vorteil darin, dass durch die erfindungsgemäße Regelung der Wärmegenerierung der Brennstoffzelle in Abhängigkeit von dem Klimaparameter eine effiziente Beheizung des Innenraumes erfolgen kann. Im Falle der bisher bekannten Systeme mit ungeregelter Wärmegenerierung der Brennstoffzelle müssen zusätzliche Wärmebedarfe, wie sie insbesondere bei kalten Außentemperaturen vorliegen, durch zusätzliche Heizvorrichtungen abgedeckt werden. Solche zusätzliche Heizvorrichtungen sind insbesondere elektrische Lufterhitzer oder elektrische Wassererhitzer.

Der mindestens eine Betriebsparameter der Brennstoffzelle ist erfindungsgemäß eine elektrische Leistung der Brennstoffzelle oder ein von der elektrischen Leistung abhängiger Wert. Die Wärmegenerierung der Brennstoffzelle hängt von der eingestellten elektrischen Leistung der Brennstoffzelle ab. Je höher die elektrische Leistung ist, umso höher ist die Wärmegenerierung. Außerdem hängt ein elektrischer Wirkungsgrad der Brennstoffzelle von deren elektrischer Leistung ab. Mit dem elektrischen Wirkungsgrad ist ein Quotient aus der elektrischen Leistung der Brennstoffzelle geteilt durch eine Gesamtleistung der Brennstoffzelle gemeint, wobei sich die Gesamtleistung aus einer Addition von der elektrischen Leistung und der Wärmeleistung bildet. Der elektrische Wirkungsgrad der Brennstoffzelle besitzt, unter ansonsten gleichen Bedingungen, bei einer bestimmten elektrischen Leistung ein Maximum. Wird die elektrische Leistung ausgehend von diesem Maximum erhöht, so erhöht sich die Wärmegenerierung, d.h. die Wärmeleistung, zum einen aufgrund der Erhöhung der elektrischen Leistung und zum andern aufgrund der Verschlechterung des elektrischen Wirkungsgrades.
Der mindestens eine Betriebsparameter kann auch ein Volumenstrom oder ein Partialdruck eines Reaktionsgases der Brennstoffzelle sein. Reaktionsgase sind üblicherweise Wasserstoff und Sauerstoff, wobei der Sauerstoff üblicherweise in Form von Luft der Brennstoffzelle zugeführt wird. Durch eine Erniedrigung des Volumenstromes oder des Partialdruckes der Reaktionsgase kann der elektrische Wirkungsgrad der Brennstoffzelle erniedrigt und damit die Wärmegenerierung erhöht werden.

Erfindungsgemäß wird das Verfahren in einem Kraftfahrzeug angewandt werden, welches neben der Brennstoffzelle auch noch einen leistungsstarken elektrischen Energiespeicher aufweist. Der elektrische Energiespeicher kann dabei elektrische Energie für den elektrischen Fahrantrieb des Kraftfahrzeuges oder auch für die sonstigen elektrischen Verbraucher des Kraftfahrzeuges liefern. In diesem Fall ist das Verfahren so ausgestaltet, dass in Abhängigkeit von dem Klimaparameter die elektrische Leistung der Brennstoffzelle und eine elektrische Leistungsabgabe des elektrischen Energiespeichers in entgegen gesetzter Richtung verändert werden. Zum Beispiel wird in Abhängigkeit von dem Klimaparameter die elektrische Leistung der Brennstoffzelle erhöht und die elektrische Leistung, d.h. die elektrische Leistungsabgabe, des elektrischen Energiespeichers erniedrigt. Auf diese Weise kann die Wärmegenerierung der Brennstoffzelle auf die oben genannten Art und Weise geregelt werden und eine elektrische Gesamtleistung eines Systems, bestehend aus der Brennstoffzelle und dem elektrischen Energiespeicher, konstant gehalten oder unabhängig von der Wärmegenerierung der Brennstoffzelle eingestellt werden.

Eine weitere vorteilhafte Ausgestaltung der Erfindung sieht vor, dass der Klimaparameter eine Temperatur des Innenraumes ist, wobei in diesem Fall die Klimamessvorrichtung einen Temperaturfühler zur Messung der Temperatur des Innenraumes aufweist. Alternativ kann der Klimaparameter eine Luftfeuchtigkeit des Innenraumes sein, wobei die Klimamessvorrichtung in diesem Fall einen Luftfeuchtigkeitssensor aufweist. Alternativ kann der Klimaparameter eine Solltemperatur des Innenraumes sein, wobei die Solltemperatur von einem Fahrer oder Mitfahrer des Kraftfahrzeuges vorgegeben ist. Die Vorgabe durch den Fahrer oder Mitfahrer kann zum Beispiel durch eine Bedienvorrichtung einer Klimatisierungseinrichtung erfolgen. Alternativ kann der Klimaparameter auch eine Differenz aus der Solltemperatur und der Temperatur, das heißt einer Ist-Temperatur, des Innenraumes sein. Alternativ kann der Klimaparameter ein Volumenstrom einer Warmluft zur Übertragung einer Wärme der Wärmeübertragungsvorrichtung zu dem Innenraum sein. Alternativ kann der Klimaparameter eine Luftfeuchtigkeit des Innraumes sein. Alternativ kann der Klimaparameter ein aus den oben genannten Größen gebildeter Wert sein.

Aus den oben genannten Größen lässt sich vorteilhafter Weise ein Wärmebedarf für die Innenraumerwärmung ableiten. Wenn der Wärmebedarf für die Erwärmung des Innenraumes gering ist, so wird die Brennstoffzelle vorteilhafter Weise bei einem maximalen elektrischen Wirkungsgrad betrieben, und die Abwärme der Brennstoffzelle reicht in diesem Fall für die verfahrensgemäße Erwärmung des Innenraumes aus. Wenn der Wärmebedarf für die Erwärmung des Innenraumes groß ist, wird die Brennstoffzelle auf die erfindungsgemäße Weise so betrieben, dass ihre Wärmegenerierung zur Deckung des erhöhten Wärmebedarfes steigt.

Eine vorteilhafte Weiterbildung des Verfahrens besteht darin, dass die Wärmeübertragungsvorrichtung einen Kühlkreislauf zur Kühlung der Brennstoffzelle und eine Innenraum-Lufterwärmungsvorrichtung aufweist, wobei der Kühlkreislauf und die Innenraum-Lufterwärmungsvorrichtung thermisch gekoppelt sind. Bei dieser Anordnung können Wärmeverluste bei der Übertragung der von der Brennstoffzelle generierten Wärme zu dem Innenraum gering gehalten werden.

Weitere Vorteile und Merkmale ergeben sich anhand der nachfolgenden Beschreibung von Ausführungsbeispielen sowie anhand der Zeichnungen, in welchen gleiche Elemente mit identischen Bezugszeichen versehen sind.

Dabei zeigen:
- Fig. 1: eine schematische Darstellung eines Kraftfahrzeuges, geeignet für die Anwendung eines erfindungsgemäßen Verfahrens,
- Fig. 2: eine schematische Darstellung des erfindungsgemäßen Verfahrens anhand eines Funktionsdiagramms.

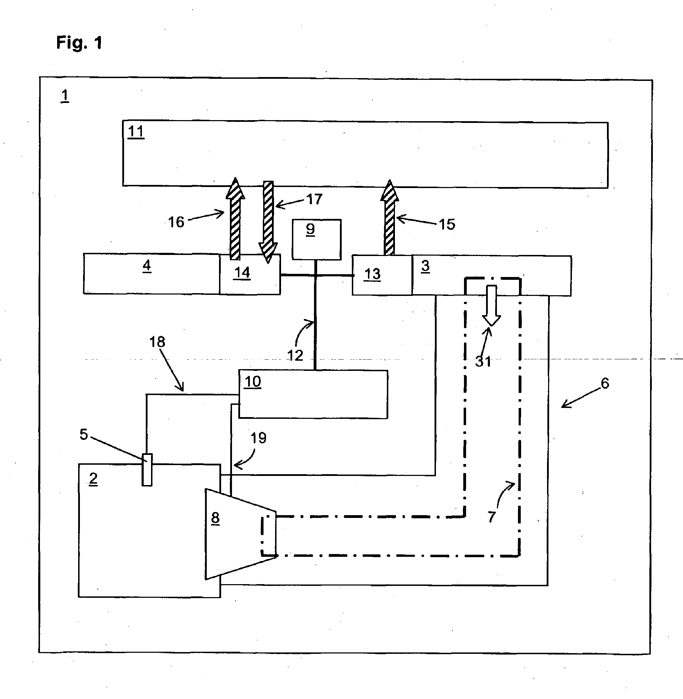

Fig. 1 zeigt eine schematische Darstellung eines Kraftfahrzeuges 1, welches für die Anwendung eines erfindungsgemäßen Verfahrens geeignet ist. Das Kraftfahrzeug 1 weist einen Innenraum 2, eine Brennstoffzelle 3 und einen elektrischen Energiespeicher in Form einer Traktionsbatterie 4 auf. Bei der Traktionsbatterie 4 handelt es sich um eine Hochvoltbatterie. Brennstoffzelle 3 und Traktionsbatterie 4 sind über nicht dargestellte Leitungen mit einem elektrischen System 11 verbunden, wobei ein nicht näher dargestelltes elektrisches Antriebssystem ein Teil des elektrischen Systems 11 ist. Die Brennstoffzelle 3 gibt über eine Brennstoffzellen-Leistungselektronik 13 eine elektrische Brennstoffzellenleistung 15 an das elektrische System 11 ab. Ebenso gibt die Traktionsbatterie 4 über eine Traktionsbatterie-Leistungselektronik 14 eine elektrische Traktionsbatterieleistung 16 an das elektrische System 11 ab. Die Traktionsbatterie 4 erhält außerdem eine elektrische Generatorleistung 17, welche von einem nicht dargestellten im elektrischen System 11 enthaltenen generatorischen System generiert wird.

Das Kraftfahrzeug 1 weist ferner eine Klimamessvorrichtung 5 in Form eines Temperaturfühlers, welcher an einer geeigneten Stelle in dem Innenraum 2 angebracht ist, auf. Von der Brennstoffzelle 3 wird in ihrem Betrieb eine Wärme 31 generiert, welche zunächst von der Brennstoffzelle 3 auf eine Wärmeübertragungsvorrichtung 6 übertragen wird. Die Wärmeübertragungsvorrichtung 6 weist einen Kühlkreislauf 7 und eine Innenraum-Lufterwärmungsvorrichtung 8 auf. Die von der Brennstoffzelle 3 generierte Wärme 31 wird im Wesentlichen über den Kühlkreislauf 7 auf die Innenraum-Lufterwärmungsvorrichtung 8 übertragen. In der Innenraum-Lufterwärmungsvorrichtung 8 wird ein nicht näher dargestellter Luftstrom erwärmt, welcher nach seiner Erwärmung dem Innenraum 2 zugeführt wird. Mittels der Innraum-Lufterwärmungsvorrichtung 8 kann eine Lufterwärmungsleistung P(L) eingestellt werden. Zu einer Steuerung und Regelung des Kraftfahrzeugs 1 entsprechend dem erfindungsgemäßen Verfahren weist das Kraftfahrzeug 1 ein Steuergerätesystem auf. Das Steuergerätesystem weist ein Klimasteuergerät 10, die Brennstoffzellen-Leistungselektronik 13, die Traktionsbatterie-Leistungselektronik 14 sowie ein Leistungsmanagementsteuergerät 9 auf.
Das Steuergerät 10, die Brennstoffzellen-Leistungselektronik 13, die Traktionsbatterie-Leistungselektronik 14 sowie das Leistungsmanagementsteuergerät 9 sind untereinander über ein Kommunikationsnetzwerk 12 verbunden, über welches Daten ausgetauscht werden können. Das Kommunikationsnetzwerk 12 weist ein CAN-Bussystem auf. Die Klimamessvorrichtung 5 ist über eine Sensorleitung 18 mit dem Steuergerät 10 verbunden. Das Steuergerät 10 ist ferner über eine Steuerleitung 19 mit der Lufterwärmungsvorrichtung 8 verbunden, so dass die Lufterwärmungsleistung mittels des Steuergerätes 10 eingestellt werden kann.

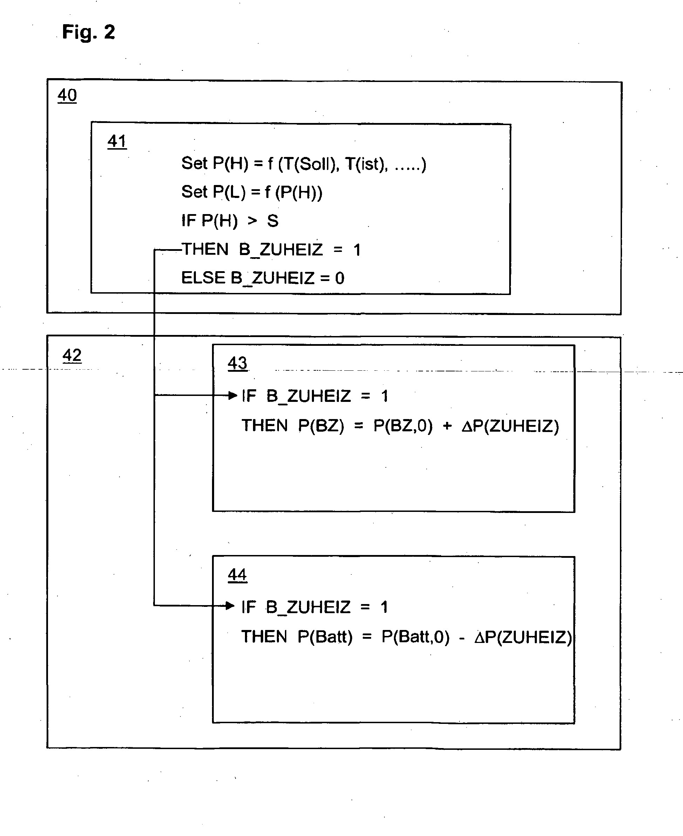

Fig. 2 zeigt eine schematische Darstellung des erfindungsgemäßen Verfahrens anhand eines Funktionsdiagramms.
Das erfindungsgemäße Verfahren weist eine Innenraumheizfunktion 41 zur Steuerung und Regelung einer Innenraumbeheizung auf. Die Innenraumheizfunktion 41 ist ein Teil einer Klimafunktion 40 zur Steuerung und Regelung einer Innenraumklimatisierung. Die Klimafunktion 40 wird mit geeigneten Hardware- und Softwaremitteln neben anderen Funktionalitäten durch das Klimasteuergerät 10 durchgeführt. Die Innenraumheizfunktion 41 weist Mittel zur Festlegung einer Innraumheizleistung P(H) auf. Damit wird in Abhängigkeit von einer Innenraumsolltemperatur T(Soll), welche von einem Fahrer oder einem Mitfahrer des Kraftfahrzeuges 1 vorgegeben ist, und in Abhängigkeit von einer Innenraumisttemperatur T(ist), welche in dem Innenraum 2 herrscht, die Innenraumheizleistung P(H) festgelegt. Außerdem wird in Abhängigkeit der festgelegten Innraumheizleistung P(H) die Lufterwärmungsleistung P(L) festgelegt. Entsprechend der festgelegten Lufterwärmungsleistung P(L) erfolgt über die Steuerleitung 19 eine Ansteuerung der Lufterwärmungsvorrichtung zur Einstellung der Lufterwärmungsleistung P(L).

Die Innenraumheizfunktion 41 legt in Abhängigkeit von der festgelegten Innenraumheizleistung P(H) einen Zuheizstatus B_ZUHEIZ fest. Dem Zuheizstatus B_ZUHEIZ wird ein Wert 1 zugeordnet, wenn die festgelegte Innenraumheizleistung P(H) größer als ein Schwellwert S ist, und dem Zuheizstatus B_ZUHEIZ wird ein Wert 0 zugeordnet, wenn die festgelegte Innenraumheizleistung P(H) kleiner als der Schwellwert S ist. Der Schwellwert S hängt unter anderem von der von der Brennstoffzelle 3 generierten Wärme 31 ab, so dass, wenn die Wärme 31 nicht ausreicht um in der Lufterwärmungsvorrichtung 8 gewünschte Innenraumheizleistung P(H) zu erzeugen, der Zuheizstatus B_ZUHEIZ den Wert 1 erhält.

Das erfindungsgemäße Verfahren weist ferner eine Leistungsmanagementfunktion 42 zur Steuerung und Regelung eines elektrischen Leistungsmanagements der Brennstoffzelle 3 und der Batterie 4 auf. Die Leistungsmanagementfunktion 42 wird mit geeigneten Hardware- und Softwaremitteln neben anderen Funktionalitäten durch das Leistungsmanagementsteuergerät 9 durchgeführt.

Mittels der Leistungsmanagementfunktion 42 des Leistungsmanagementsteuergerätes 9 wird eine benötigte elektrische Gesamtleistung auf eine elektrische Leistung P(BZ) der Brennstoffzelle 3 und eine elektrische Leistung P(Batt) der Batterie 4 aufgeteilt.
Solange der Zuheizstatus B_ZUHEIZ den Wert 0 besitzt, ist die Aufteilung verfahrensgemäß so, dass ein maximaler elektrischer Wirkungsgrad resultiert. In diesem Fall liegen eine elektrische Grundleistung P(BZ,0) der Brennstoffzelle 3 und eine elektrische Grundleistung P(Batt,0) der Batterie 4 vor. Dabei kann die Aufteilung in Abhängigkeit von verschiedenen Parametern, wie zum Beispiel einer Bauteiletemperatur oder der elektrischen Gesamtleistung, variieren.

Wenn der Zuheizstatus B_ZUHEIZ den Wert 1 erhält, erfolgt mittels einer Brennstoffzellen-Lastmanagementfunktion 43 innerhalb der Leistungsmanagementfunktion 42 eine Erhöhung der elektrischen Leistung P(BZ) der Brennstoffzelle 3 um eine Zuheizleistung ΔP. Damit wird zwangläufig auch die von der Brennstoffzelle 3 generierte Wärme 31 erhöht, wodurch schließlich auch die Lufterwärmungsleistung P(L) erhöht werden kann und auch erhöht wird. Gleichzeitig erfolgt in diesem Fall mittels einer Batterielastmanagementfunktion 44 eine Erniedrigung der elektrischen Leistung P(Batt) der Batterie 4 um den Betrag der Zuheizleistung ΔP, so dass die elektrische Gesamtleistung, bei sonst gleichbleibenden Bedingungen, konstant bleibt. Durch die Erhöhung der elektrischen Leistung P(BZ) der Brennstoffzelle 3 erniedrigt sich der elektrische Wirkungsgrad des Gesamtsystems. Die dabei entstehende zusätzliche Abwärme, respektive die erhöhte Wärme 31, wird allerdings zur effizienten Erwärmung des Innenraumes 2 verwendet. Bei einer alternativen zusätzlichen elektrischen Beheizung des Innenraumes 2 mittels eines elektrischen Lufterhitzers oder eines elektrischen Wassererhitzers wäre ein energetischer Gesamtwirkungsgrad geringer.

Die jeweils einzustellende elektrische Leistung P(BZ) der Brennstoffzelle 3 wird über das Kommunikationsnetzwerk 12 an die Brennstoffzellen-Leistungselektronik 13 kommuniziert und dort entsprechend eingestellt. Die jeweils einzustellende elektrische Leistung P(Batt) der Batterie 4 wird über das Kommunikationsnetzwerk 12 an die Batterie-Leistungselektronik 14 kommuniziert und dort entsprechend eingestellt. Nach der Erhöhung der von der Brennstoffzelle 3 generierten Wärme 31 erfolgt eine Erhöhung der Lufterwärmungsleistung P(L).

### Bezugszeichenliste

- 1: Kraftfahrzeug
- 2: Innenraum
- 3: Brennstoffzelle
- 4: Traktionsbatterie
- 5: Klimamessvorrichtung
- 6: Wärmeübertragungsvorrichtung
- 7: Kühlkreislauf
- 8: Innenraum-Lufterwärmungsvorrichtung
- 9: Leistungsmanagementsteuergerät
- 10: Klimasteuergerät
- 11: Elektrisches System
- 12: Kommunikationsnetzwerk
- 13: Brennstoffzellen-Leistungselektronik
- 14: Traktionsbatterie-Leistungselektronik
- 15: Elektrische Brennstoffzellenleistung
- 16: Elektrische Traktionsbatterieleistung
- 17: Elektrische Generatorleistung
- 18: Sensorleitung
- 19: Steuerleitung
- 31: Wärme, von der Brennstoffzelle generiert
- 40: Klimafunktion
- 41: Innenraumheizfunktion
- 42: Leistungsmanagementfunktion
- 43: Brennstoffzellen-Lastmanagementfunktion
- 44: Batterie-Lastmanagementfunktion
- P(H): Innraumheizleistung
- P(L): Lufterwärmungsleistung
- T(Soll): Innenraumsolltemperatur
- T(ist): Innenraumisttemperatur
- B_ZUHEIZ: Zuheizstatus
- P(BZ): Elektrische Leistung der Brennstoffzelle
- P(Batt): Elektrische Leistung der Batterie
- P(BZ,0): Elektrische Grundleistung der Brennstoffzelle
- P(Batt,0): Elektrische Grundleistung der Batterie
- ΔP: Zuheizleistung

## Patentansprüche

1. Verfahren zum Beheizen eines Innenraumes (2) eines Kraftfahrzeuges (1), aufweisend
- eine Brennstoffzelle (3),
- einen leistungsstarken elektrischen Energiespeicher (4),
- eine Klimamessvorrichtung (5), durch welche eine Messung eines Klimaparameters (T(ist), T(soll)) des Innenraumes (2) des Kraftfahrzeuges (1) erfolgt,
- eine Wärmeübertragungsvorrichtung (6) zur Übertragung von Wärme (31), welche von der Brennstoffzelle (3) generiert wird, zu dem Innenraum (2) des Kraftfahrzeuges (1),
wobei
zum Zwecke einer Beheizung des Innenraums (2) eine Rate der Wärme (31), welche von der Brennstoffzelle (3) generiert wird, in Abhängigkeit von dem Klimaparameter (T(ist), T(soll)) eingestellt wird, indem eine elektrische Leistung (P(BZ)) der Brennstoffzelle (3) in Abhängigkeit von dem Klimaparameter (T(ist), T(soll)) eingestellt wird,
**dadurch gekennzeichnet, dass**
in Abhängigkeit von dem Klimaparameter die elektrische Leistung der Brennstoffzelle und eine elektrische Leistungsabgabe des elektrischen Energiespeichers in entgegen gesetzter Richtung verändert werden.

2. Verfahren nach Anspruch 1,
**dadurch gekennzeichnet, dass**
der leistungusstarke elektrische Energiespeicher eine Traktionbatterie ist und in Abhängigkeit von dem Klimaparameter die elektrische Leistung (P(BZ)) der Brennstoffzelle (3) erhöht und die elektrische Leistung (P(Batt)) der Traktionsbatterie (4) erniedrigt wird.

3. Verfahren nach einem der Ansprüche 1 bis 2,
**dadurch gekennzeichnet, dass**
die elektrische Leistung (P(BZ)) der Brennstoffzelle (3) und die elektrische Leistung (P(Batt)) der Traktionsbatterie (4) jeweils zumindest zum Teil als Antriebsleistungen für einen Fahrantrieb des Kraftfahrzeugs 1 verwendet werden.

4. Verfahren nach einem der Ansprüche 1 bis 3,
**dadurch gekennzeichnet, dass**
der Klimaparameter eine Isttemperatur (T(ist)) des Innenraumes (2) oder eine Differenz aus einer Solltemperatur (T(soll)) und der Isttemperatur (T(ist)) des Innenraumes (2) oder ein Volumenstrom einer Warmluft zur Übertragung einer Wärme der Wärmeübertragungsvorrichtung (6) zu dem Innenraum (2) oder eine Luftfeuchtigkeit des Innenraumes (2) oder eine Außentemperatur oder ein aus diesen Größen gebildeter Wert ist.

5. Verfahren nach einem der Ansprüche 1 bis 4,
**dadurch gekennzeichnet, dass**
die Wärmeübertragungsvorrichtung (6) einen Kühlkreislauf (7) zur Kühlung der Brennstoffzelle (3) und eine Innenraum-Lufterwärmungsvorrichtung (8) aufweist, wobei der Kühlkreislauf (7) und die Innenraum-Lufterwärmungsvorrichtung (8) thermisch gekoppelt sind.

## Claims

1. Method for heating an interior (2) of a motor vehicle (1), comprising:
- a fuel cell (3),
- a powerful electric energy storage device (4),
- a climate measuring device (5) for a measurement of a climate parameter (T(ist)), T(soll)) of the interior (2) of the motor vehicle (1),
- a heat transfer device (6) for transferring heat (31) generated by the fuel cell (3) to the interior (2) of the motor vehicle (1),
wherein, for the purpose of heating the interior (2), a rate of the heat (31) generated by the fuel cell (3) is adjusted as a function of the climate parameter (T(ist)), T(soll)) by adjusting an electric power (P(BZ)) of the fuel cell (3) as a function of the climate parameter (T(ist)), T(soll)),
**characterised in that**
the electric power of the fuel cell and an electric power output of the electric energy storage device are varied in opposite directions as a function of the climate parameter.

2. Method according to claim 1,
**characterised in that** the powerful electric energy storage device is a traction battery and **in that**, as a function of the climate parameter, the electric power (P(BZ)) of the fuel cell (3) is increased and the electric power (P(Batt)) of the traction battery (4) is reduced.

3. Method according to claim 1 or 2,
**characterised in that** the electric power (P(BZ)) of the fuel cell (3) and the electric power (P(Batt)) of the traction battery (4) are at least partially used as drive power for a travelling drive of the motor vehicle (1).

4. Method according to any of claims 1 to 3,
**characterised in that** the climate parameter is an actual temperature (T(ist)) of the interior (2), or a difference between a set temperature (T(soll)) and the actual temperature (T(ist)) of the interior (2), or a flow rate of a warm air for transferring a heat of the heat transfer device (6) to the interior (2), or an air humidity of the interior (2), or an external temperature, or a value formed from these variables.

5. Method according to any of claims 1 to 4,
**characterised in that** the heat transfer device (6) comprises a cooling circuit (7) for cooling the fuel cell (3) and an interior air heating device (8), the cooling circuit (7) and the interior air heating device (8) being thermally coupled.

## Revendications

1. Procédé de chauffage d'un habitacle (2) d'un véhicule automobile (1) comprenant :
- une cellule de combustible (3),
- un accumulateur d'énergie électrique (4) très performant,
- un dispositif de mesure de climat (5), qui permet d'effectuer une mesure d'un paramètre de climat (T(ist), T(soll)) de l'habitacle (2) du véhicule automobile (1),
- un dispositif de transmission de chaleur (6) destiné à transmettre la chaleur (31) qui est générée par la cellule de combustible (3) à l'habitacle (2) du véhicule automobile (1), afin de chauffer l'habitacle (2) un taux de la chaleur (31), qui est généré par la cellule de combustible (3), étant réglé en fonction du paramètre de climat (T(ist), T(soll)), tandis qu'une puissance électrique (P(BZ)) de la cellule de combustible (3) étant réglée en fonction du paramètre de climat (T(ist), T(soll)), **caractérisé en ce qu'**en fonction du paramètre de climat la puissance électrique de la cellule de combustible et une puissance électrique délivrée de l'accumulateur électrique étant modifiées dans la direction opposée.

2. Procédé selon la revendication 1, **caractérisé en ce que** l'accumulateur électrique très performant est une batterie de traction et qu'en fonction du paramètre de climat la puissance électrique (P(BZ)) de la cellule de combustible (3) augmente et la puissance électrique (P(Batt)) de la batterie de traction (4) diminue.

3. Procédé (1) selon l'une quelconque des revendications 1 à 2, **caractérisé en ce que** la puissance électrique (P(BZ)) de la cellule de combustible (3) et la puissance électrique (P(Batt)) de la batterie de traction (4) sont utilisées chacune au moins partiellement en tant que puissances d'entraînement pour un système d'entraînement du véhicule automobile (1).

4. Procédé selon l'une quelconque des revendications 1 à 3, **caractérisé en ce que** le paramètre de climat est une température réelle (T(ist)) de l'habitacle ou une différence entre une température théorique (T(soll)) et la température réelle (T(ist)) de l'habitacle ou un flux volumétrique d'un air chaud destiné à la transmission d'une chaleur provenant du dispositif de transmission de chaleur (6) à l'habitacle (2) ou une humidité de l'air de l'habitacle (2) ou une température extérieure ou encore une valeur formée à partir de ces données.

5. Procédé selon l'une quelconque des revendications 1 à 4, **caractérisé en ce que** le dispositif de transmission de chaleur (6) présente un circuit de refroidissement (7) destiné à refroidir la cellule de combustible (3) et un dispositif de transmission de chaleur (8) d'habitacle, le circuit de refroidissement (7) et le dispositif de transmission de chaleur (8) d'habitacle étant couplés thermiquement.
